# EUROPEAN PATENT APPLICATION

(11) **EP 3 029 825 A1**
(43) Date of publication of application: **08.06.2016**
(21) Application number: 14004068.4
(22) Date of filing: 03.12.2014
(51) Int. Cl.: H02N 2/18

(54) **Device and method for generating electricity from acoustic energy**

(71) Applicant: Papadakos, Charalambos, 26443 Anthoupoli (GR); University Of Patras, Rio, 26504 Patra (GR); Mourjopoulos, Ioannis, 26504 Kato Kastritsi, Rio (GR)
(72) Inventor: Mourjopoulos, Ioannis, 26504 Kato Kastritsi, Rio (GR); Papadakos, Charalambos, 26443 Anthoupoli, Patra (GR)
(74) Representative: Malamis, Alkisti-Irene

(57) **Abstract**

A novel method for generating sufficient electric power for energy harvesting applications from acoustic power produced within enclosures and especially by operating loudspeakers is disclosed. The disclosed method is applied in conjunction with piezoelectric transducers, which interact with acoustic waves via an acoustical-mechanical coupling mechanism. The coupling mechanism disclosed herein offers a mechanical advantage and achieves impedance matching between air and the piezoelectric material. This mechanism achieves the optimal energy transfer and the generation of sufficient electric power for energy harvesting applications.

## Description

### Field of the invention

The present invention relates to the broad field of energy harvesting and specifically to the optimal exploitation of acoustic energy produced into enclosures, cabinets, boxes, ducts, ports, horns and rooms,

One specific manifestation of the optimization principle applies to the extraction of electrical energy from the acoustic energy generated by electroacoustic transducers, especially by loudspeakers during their operation.

Electrical energy extracted as such can offer semi-autonomous or autonomous operation for devices and systems that operate in the proximity or in conjunction to loudspeakers and which demand low electric power for their operation, i.e. in the order of nW to mW, e.g. wireless sensor networks, wireless audio devices, mobile devices etc. Electrical energy extracted as such may be also utilized as power feedback to loudspeakers and reduce their power consumption during operation.

### Background

Acoustic energy is produced by numerous daily life activities such as transportation systems, machinery, physical phenomena, man-mad devices and systems related to speech and music reproduction such as electroacoustic transducers especially loudspeakers.

However, harvesting of acoustic energy has not been exploited thoroughly to date mainly because of practical limitations arising from the fact that acoustic power density is inherently weak compared to the power density of other energy sources. For instance, a loud sound source of 120 dB-SPL, at distance 1 m, produces 1 W/m², while at sea level, at the equator, on a clear day, sun produces 1000 W/m².

Nevertheless, acoustic energy offers the advantage of being present over long time intervals and during specific human activities. Moreover, it is practically independent from environmental variations and can be harvested at the locality of any sound activity.

Over the last decade, the gradual reduction in the power consumption of a wide variety of contemporary applications and the concurrent operation of these applications within acoustically noisy environment, have motivated the academic and industrial research to investigate and exploit acoustic energy for low scale electric power generation.

With respect to the specific efforts, according to all known related research results, harvesting of acoustic energy produced by electroacoustic transducers and especially loudspeakers has not yet been exploited to any significant degree.

Up to now, acoustic energy that is not desirable to be present is absorbed by passive elements, such as rockwool, fabrics, resonant and panel absorbers, etc., which convert such energy to heat. Such unwanted acoustic energy is often radiated and absorbed within enclosures such as rooms, boxes, cabinets, etc. and this is mostly the case with loudspeakers radiating within such enclosures.

In most cases, acoustic radiation from such electroacoustic transduction elements is restricted to half-space by enclosing them into a box and absorbing the radiation from the back of the radiating element using acoustic lining materials e.g. rockwool. Since the great majority of loudspeaker systems operate within such enclosing cabinet structures, there is no known method for extracting electrical energy from acoustic energy produced within the enclosure of such systems during operation.

Acoustic power density produced by loudspeakers due to their back radiation and within their enclosures during their operation is extremely high and especially at low frequencies, hence justifying acoustic energy harvesting.

A device and method dedicated to the harvesting of acoustic energy produced in such cases and specifically within loudspeaker enclosures could offer a radical alternative perspective wherein the available acoustic energy would be converted into useful electrical energy instead of just being converted to heat through absorption by the aforementioned elements.

The advantage of such local harvesting of acoustic energy is that the extracted electrical energy can allow autonomous or semi-autonomous operation for devices and systems that demand low electric power for their operation, i.e. in the order of nW to mW e.g. wireless sensor networks, wireless audio devices etc. and/or improve operating dependence on batteries for mobile devices such as portable media players, mobile phones, tablet computers etc., when these systems or devices operate proximal to or in conjunction to loudspeakers.

Such local harvesting of acoustic energy can be also utilized as power feedback to loudspeaker themselves and reduce their power consumption during operation.

Since acoustic waves are fundamentally a form of mechanical vibration, it is well known that their conversion into electrical signals requires an intermediate step of energy transformation, wherein acoustic energy is transformed to mechanical energy prior to be transformed into electrical energy.

Due to the aforementioned low density of acoustic energy and hence the insufficient level of recovered mechanical energy for such applications, there is a need for optimization of such transformation prior to the transformation into useful electrical energy.

Hence, the present invention introduces a novel acoustic-to-mechanical energy transduction optimization suitable for exploiting unwanted acoustic radiation that is transferred within enclosures, cabinets, boxes, ducts, ports, horns and rooms and this optimization is enabled by a suitable device and a suitable method.

The state of the art on harvesting and converting mechanical and hence acoustic energy into electrical energy utilizes mostly electrodynamic, electromagnetic and piezoelectric based methods to achieve electric power generation from sound. Among these, the piezoelectric conversion method is gradually established due to the rapid evolution of ceramic materials which now are utilized broadly in energy harvesting applications for their efficiency, simplicity and low cost.

Piezoelectric conversion methods utilize the charge separation in the piezoelectric material in order to generate an output voltage when a piezoelectric element is deformed or vibrated due to incident mechanical force exerted directly or indirectly by acoustic waves.

However, the direct exposure of piezoelectric transducers to sound generated within enclosures, cabinets, boxes, ducts, ports and rooms, yields insufficient electrical energy which is not viable to be exploited in practical applications.

The present invention describes for the first time and employs an application-specific optimized intermediate acoustical-mechanical coupling mechanism between the sound waves and the piezoelectric transducer, which greatly amplifies the electric power that can be generated by the piezoelectric transducer due to the acoustic excitation.

The optimized intermediate acoustical-mechanical coupling mechanism comprises a vibrating element and a mechanical leverage connected to the piezoelectric transducer. The optimization method comprises tuning the parameters of all the above mechanical and piezoelectric components and their coupling to the specific acoustic energy and frequency content of the sound waves generated within specific enclosures, cabinets, boxes, ducts, ports, horns and rooms.

With respect to the above, no current method nor device exists for generating sufficient electric power from the conversion of sounds due to acoustic radiation within enclosures, cabinets, boxes, ducts, ports horns and rooms via similar optimized intermediate acoustical-mechanical coupling mechanism utilizing a piezoelectric transducer.

More specifically, no current method nor device exists for generating sufficient electric power from the conversion of sounds due to acoustic radiation within enclosures of loudspeaker systems during their operation via similar optimized intermediate acoustical-mechanical coupling mechanism utilizing a piezoelectric transducer.

### Summary of the invention

It is an object of the present invention to provide a novel device and method for generating electric power sufficient for energy harvesting from acoustic power produced within enclosures, cabinets, boxes, ducts, ports horns and rooms and especially by operating loudspeakers.

The method disclosed herein is applied in conjunction with piezoelectric transducers. Such transducers are capable of converting an input force to an output voltage (sensors/generators) and vice versa (actuators) according to the bidirectional nature of piezoelectric effect.

In the present invention, piezoelectric transducers are utilized as generators and they are excited by acoustic waves produced within enclosures, cabinets, boxes, ducts, ports horns and rooms and especially by operating loudspeakers.

According to the disclosed method, acoustic excitation of a piezoelectric transducer is realized via an acoustical-mechanical coupling mechanism introduced between the acoustic waves and the piezoelectric transducer.

Such indirect coupling mechanism is optimized according to the specific application and offers a mechanical advantage achieving impedance matching between the sound propagation medium, i.e. air, and the ceramic material of the piezoelectric transducer. Hence, said mechanism succeeds the optimal and sufficient for energy harvesting energy transfer from one medium to the other.

The device disclosed herein provides
(a) an optimized intermediate acoustical-mechanical coupling mechanism introduced between the acoustic waves and the piezoelectric transducer, comprising
   (I) a surface component that vibrates in response to an incident sound wave and
   (II) a lever mechanism that is attached on one end to the surface component and on the other end to a piezoelectric transducer,
(b) a piezoelectric transducer positioned such that the vibration of the surface component causes the vibration of the piezoelectric transducer via the lever mechanism in order to produce an output voltage and
(c) a harvesting circuit electrically coupled to the piezoelectric transducer and configured to receive said output voltage and supply/store electric power to a load/energy storage device.

Said harvesting circuit may comprise an AC/DC circuit (e.g. bridge rectifier) and an appropriate voltage regulating circuit. Additional elements such as energy storage devices, e.g. rechargeable battery, capacitor etc. may optionally be used. These system elements are implemented via known methods and their detailed description is beyond the scope of this invention.

Preferably, the piezoelectric transducer is positioned on a rigid wall. In a loudspeaker system implementation of the present invention, such rigid wall may be an inner wall of the loudspeaker enclosure.

Advantageously, a plurality of piezoelectric transducers, may be combined with one of more of the said mechanism in order to increase the generated electric power.

The shape of the piezoelectric transducer is not limited to but it could be that of a plate, a unimorph or bimorph cantilever beam, a multilayer etc.

The device disclosed herein is implemented within enclosures, cabinets, boxes, ducts, ports, horns and rooms and specifically into loudspeaker enclosures in order to exploit the acoustic energy produced therein during operation, but such systems are not the limiting host structures.

The device described in the present invention may be also implemented inside any enclosed space wherein significant amount of acoustic energy is produced, or even outdoors for exploiting ambient acoustic energy.

The present invention also describes an energy harvesting method comprising: providing a device having an optimized intermediate acoustical-mechanical coupling mechanism introduced between the acoustic waves and the piezoelectric transducer, wherein said mechanism comprises
a surface component that vibrates in response to an incident sound wave and
a lever mechanism that is attached on one end to the surface component and on the other end to a piezoelectric transducer;
providing a piezoelectric transducer positioned such that the vibration of the surface component causes the vibration of the piezoelectric transducer via the lever mechanism in order to produce an output voltage; and
harvesting the electrical energy generated with a harvesting circuit electrically coupled to the piezoelectric transducer and configured to receive said output voltage and supply electric power to a load or store generated electrical energy to an energy storage device.

Preferably, in the said method optimization is realized via tuning the parameters of all related mechanical and piezoelectric components and their coupling to the specific acoustic energy and frequency content of the sound waves and the spatial arrangement of these components.

### Brief description of the figures

Figure 1 is a generic block diagram of the harvesting device realized according to an embodiment of the present invention.
Figure 2 is a schematic of the optimized intermediate acoustical-mechanical coupling mechanism in accordance with an embodiment of the present invention.
Figure 3 is a schematic of the optimized intermediate acoustical-mechanical coupling mechanism positioned within the enclosure of a loudspeaker system and combined with a piezoelectric plate according to an embodiment of the present invention.
Figure 4 is a schematic of the optimized intermediate acoustical-mechanical coupling mechanism positioned into the enclosure of a loudspeaker system and combined with a piezoelectric beam according to an embodiment of the present invention.

### Detailed description of the invention

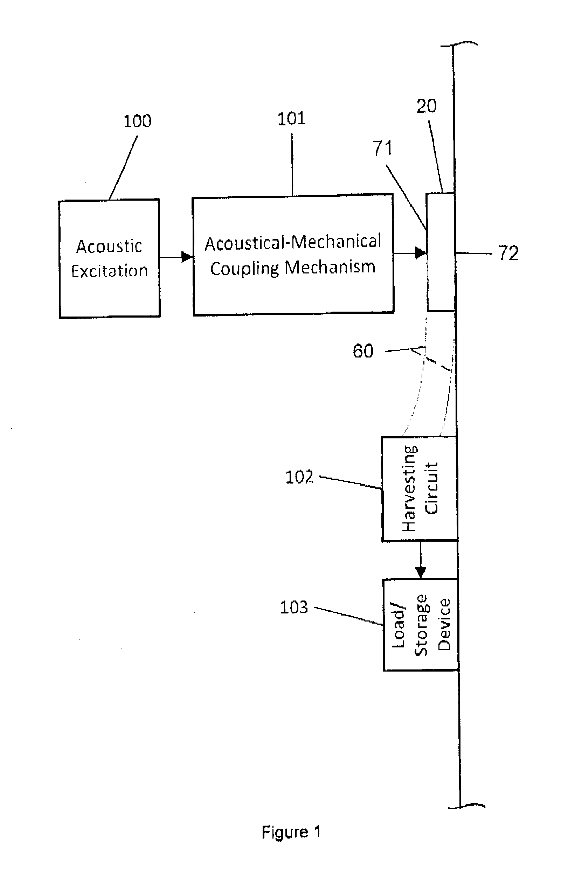

Fig. 1 illustrates a generic block diagram representing the typical energy harvesting process with the use of the optimized intermediate acoustical-mechanical coupling mechanism according to the present invention. In this figure, acoustic excitation **100** causes the action of the optimized intermediate acoustical-mechanical coupling mechanism **101,** which in turn causes the vibration of the piezoelectric plate **20.** Vibration of the piezoelectric plate **20** results to an output voltage across its top **71** and bottom **72** electrode. Said output voltage is transferred through the wires **60** to the harvesting circuit **102** in order to be converted, conditioned and be supplied to a load or be stored in an energy storage device **103.**

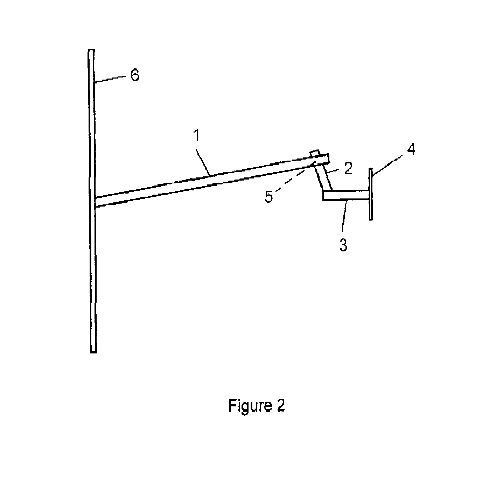

The optimized intermediate acoustical-mechanical coupling mechanism of the present invention is illustrated Fig. 2. In this figure, surface component **6** vibrates in response to an incident sound wave. Incidence of the sound wave exerts a mechanical force on the surface component **6.** Vibration of the surface component **6** due to such excitation force causes axis **1** and axis **2** to rotate around the pivot **5** acting as the long and the short arm of a lever system respectively. Such a mechanical leverage action amplifies the force exerted on the surface component **6** and force axis **3** to move as a piston applying said amplified force via its footplate **4.**

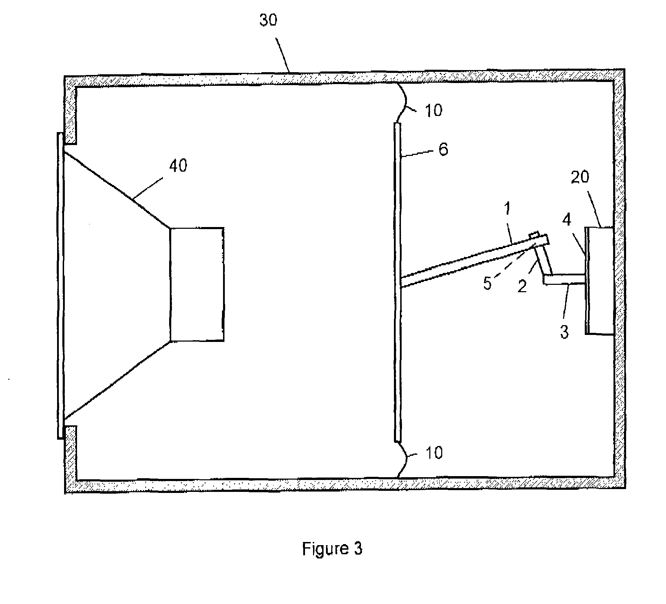

One embodiment of the present invention is illustrated in Fig. 3. In this figure, the optimized intermediate acoustical-mechanical coupling mechanism shown in Fig. 2 is employed within the loudspeaker enclosure **30.** According to this figure, the surface component **6** of the optimized intermediate acoustical-mechanical coupling mechanism is suspended on the internal walls of the loudspeaker enclosure **30** through the suspensions **10.** During the operation of loudspeaker **40** sound waves are produced into the closed space **50.** Sound waves produced as such cause the vibration of the surface component **6** that in turn cause the mechanical leverage action of the lever system which consist of axis **1** and **2** rotating around the pivot **5** and axis **3** and its footplate **4.** The mechanical leverage action of the lever system results to the optimal and sufficient amplification of the force exerted on the surface component 6. Said amplified force is applied to the piezoelectric plate **20** which is mounted on the back wall of the loudspeaker enclosure **30** through axis **3** via its footplate **4.**

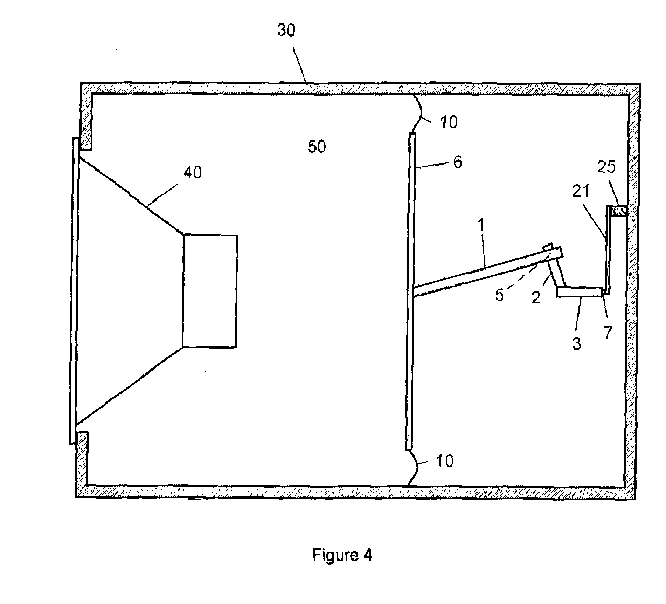

A second embodiment of the present invention is illustrated in Fig. **4****.** The arrangement shown in this figure differs from the arrangement presented in Fig. 3 at the kind of the piezoelectric transducer utilized for realizing the energy harvesting process. More specifically, the footplate **4** shown in Fig. 3 has been modified here, denoted in this figure 4 as **7,** to better fit to the tip end of a piezoelectric beam **21,** hence to excite optimally said piezoelectric transducer. On the other end, piezoelectric beam **21** is mounted rigidly on basis **25,** which in turn is mounted rigidly on the back wall of the loudspeaker enclosure **30,** in order to realize optimally the flexural motion.

Figures 3 and 4 are indicative embodiments of the optimized intermediate acoustical-mechanical coupling mechanism into loudspeaker enclosures and in no case are limiting with respect to their arrangement or relative dimensions for any similar embodiment.

For instance, the optimized intermediate acoustical-mechanical coupling mechanism may be introduced within any other type of enclosure, cabinet, box, duct, port, horn and room in order to exploit acoustic energy produced therein, but even such structures are not the limiting host structures for implementing the current method.

The method described in the present invention may be also implemented inside any enclosed space wherein significant amount of acoustic energy is produced, or even outdoors in suitable structures for exploiting ambient acoustic energy.

## Claims

1. A device for acoustic energy harvesting comprising an optimized intermediate acoustical-mechanical coupling mechanism, wherein said coupling mechanism comprises a vibrating element and a mechanical leverage connected to the piezoelectric transducer.

2. A device for acoustic energy harvesting according to claim 1 comprising
a. an optimized intermediate acoustical-mechanical coupling mechanism introduced between the acoustic waves and the piezoelectric transducer, which comprises
- a surface component **(6)** that vibrates in response to an incident sound wave and
- a lever mechanism (**1-2-3-4-5**) that is attached on one end to the surface component (**6**) and on the other end to a piezoelectric transducer (e.g. **20**);
b. a piezoelectric transducer (**20, 21**) positioned such that the vibration of the surface component (**6**) causes the vibration of the piezoelectric transducer (**20**, **21**) via the lever mechanism (**1-2-3-4-5**) in order to produce an output voltage; and
c. a harvesting circuit (**102**) electrically coupled to the piezoelectric transducer (**20, 21**) and configured to receive said output voltage and supply electric power to a load or store generated electric energy to an energy storage device (**103**).

3. A device according to any one of claims 1 to 2 wherein such device is implemented within the enclosure of a loudspeaker system.

4. A device according to any one of claims 1 to 2 wherein such device is implemented within any type of enclosure, cabinet, box, duct, port, horn and room or a combination of such components.

5. A device according to any one of claims 3 or 4 wherein the piezoelectric transducer is attached to an inner wall of the loudspeaker system or of the other type of enclosure used.

6. A device according to any one of claims 1 to 5, wherein such device is positioned outdoors.

7. A device according to any of claims 1 to 5 wherein the piezoelectric transducer is a plate (**20**), a unimorph or bimorph cantilever beam (**21**), or a multilayer.

8. A device according to any of claims 1 to 7 comprising a plurality of piezoelectric transducers combined with one or more optimized intermediate acoustical-mechanical coupling mechanisms in order to increase the generated electric power.

9. A device according to any of claims 1 to 8, wherein the harvesting circuit comprises AC/DC circuit (e.g. bridge rectifier) and appropriate voltage regulating circuit.

10. A device according to any of claims 1 to 9, wherein additional elements such as energy storage devices, e.g. rechargeable battery, capacitor are used.

11. A method for acoustic energy harvesting comprising:
- providing a device having an optimized intermediate acoustical-mechanical coupling mechanism introduced between the acoustic waves and the piezoelectric transducer, which comprises
a surface component (**6**) that vibrates in response to an incident sound wave and
a lever mechanism (1-2-3-4-5) that is attached on one end to the surface component (6) and on the other end to a piezoelectric transducer (20, 21);
- providing a piezoelectric transducer (**20, 21**) positioned such that the vibration of the surface component (**6**) causes the vibration of the piezoelectric transducer (**20, 21**) via the lever mechanism (**1-2-3-4-5**) in order to produce an output voltage; and
- harvesting the electrical energy generated with a harvesting circuit (**102**) electrically coupled to the piezoelectric transducer (**20, 21**) and configured to receive said output voltage and supply electric power to a load or store generated electrical energy to an energy storage device (**103**).

12. A method according to claim 11, wherein optimization is realized via tuning the parameters of all related mechanical and piezoelectric components and their coupling to the specific acoustic energy and frequency content of the sound waves and the spatial arrangement of these components.
